# EUROPEAN PATENT APPLICATION

(11) **EP 3 133 525 A1**
(43) Date of publication of application: **22.02.2017**
(21) Application number: 15192059.2
(22) Date of filing: 29.10.2015
(51) Int. Cl.: G06K 7/08, G06K 19/067

(54) **CAPACITIVE INFORMATION CARRIER COMPRISING AN ACTIVATION AREA**

(30) Priority: 20.08.2015 EP 15181771
(71) Applicant: T+Ink GmbH, 09113 Chemnitz (DE)
(72) Inventor: WEIGELT, Karin, 09112 Chemnitz (DE); FÖRSTER, Matthias, 01307 Dresden (DE); THIELE, Jan, 09224 Chemnitz/Grüna (DE); FUNKE, Stefanie, 09117 Chemnitz (DE)
(74) Representative: Hertin und Partner Rechts- und Patentanwälte PartG mbB

(57) **Abstract**

The invention relates to a system comprising a device with a capacitive surface sensor and a capacitive information carrier comprising an electrically conductive pattern on an electrically non-conductive substrate for transmitting information to the device, wherein the conductive pattern comprises an activation area. Moreover, the invention relates to a method for transmitting information from a capacitive information carrier to a device comprising a capacitive surface sensor by touching the activation area with a conductive object, while the capacitive information carrier is brought into contact with the capacitive surface sensor.

## Description

The invention relates to a system comprising a device with a capacitive surface sensor and a capacitive information carrier comprising an electrically conductive pattern on an electrically non-conductive substrate for transmitting information to the device, wherein the conductive pattern comprises an activation area. Moreover, the invention relates to a method for transmitting information from a capacitive information carrier to a device comprising a capacitive surface sensor by touching the activation area with a conductive object, while the capacitive information carrier is brought into contact with the capacitive surface sensor.

### Background

The last decade has seen a rise in computational devices with which users can interact by means of touch-sensitive screens or touch screens. Such touch screens are a particular embodiment of capacitive surface sensors, which detect the capacitance of an object based on capacitive coupling. Touchscreens are commonly optimized to detect the human body capacitance and sense therefore touch inputs generated for instance by the finger touch of a user. Electronic devices comprising such touch screens are, without being limited to, smart phones, tablet computers, touch pads, PDA's, smart watches, mp3 players and the like. On these devices the user typically uses his finger or a suitable conductive object, for instance a stylus, to transmit information to the device and perform tasks such as typing, reading, surfing the internet, playing games or controlling software. Furthermore, devices comprising capacitive sensors in the form of touch screens or integrated in touch displays are used to control machines or robots in the manufacturing industry.

Taking advantage of the capability of capacitive surface sensors to detect the shape of conductive patterns, capacitive information carriers have been developed in the prior art that can transmit defined information to touch screen devices.

For instance, WO 2011/154524 A1 describes a capacitive information carrier that comprises an electrically conductive layer on a non-conductive substrate. The electrically conductive layer takes the shape of a touch structure (also referred to as a touch pattern) that when brought into contact with a touch screen of a smart device is read as multi-touch user input. Different touch patterns can be designed in order to generate different patterns of multi-touch user inputs. Thereby the information carrier of the WO 2011/154524 A1 allows for the transmission of information - in form of a touch pattern - to touch screen devices. The information carrier of the WO 2011/154524 A1 can be used for a number of different applications, for example as an admission ticket, a playing card or an authenticity certificate. Such capacitive information carriers have a number of advantages over other methods to encode information readable by smart devices. For instance, in the prior art bar codes, i.e. optically readable patterns of stripes, are described that can be detected by a camera and processed by the device. Advantageously in contrast to bar codes, touch patterns of the capacitive information carriers do not have to be visible. The interaction between the capacitive information carrier and the touch screen device is due to capacitive coupling, which is not disturbed in case the touch pattern is covered by a non-transparent layer. Therefore, capacitive information carriers such as the ones described in WO 2011/154524 A1, can be used for instance to label products in a way that is invisible for a consumer. This may be e.g. desired for marketing reasons and the optical appearance of the information carrier. The possibility to overprint the touch pattern allows moreover to freely decorate the information carrier, e.g. as a playing card for touch screen devices. In contrast to bar codes, the information coded in capacitive information carriers cannot be easily copied. Capacitive information carriers such as the one described in WO 2011/154524 A1 provide therefore the means for very secure authentication methods.

In WO 2011/154524 A1, the touch pattern is formed by an electrically conductive layer of a particular shape comprising different electrically conductive areas. The touch points are electrically conductive areas that resemble the tip of a finger in terms of size and/or capacity. A coupling area is an electrically conductive area that may be situated at the border of the touch pattern and typically has an area larger than the touch points. The touch points and the coupling area are connected by conductive paths. In order to transmit information from the capacitive information carrier to the touch screen device, the user touches the coupling area while bringing the capacitive information carrier into contact with the touch screen. Thereby the entire conductive layer of the capacitive information carrier is set onto the potential of the user. The smart device will sense at the position of the touch points on the touch screen a change in capacitance that is similar to the change in capacitance that would occur if a human fingertip would touch the touch screen at this position. Advantageously the position of the touch points of the touch pattern are therefore read by the device as a multi-touch user input. The user holding the information carrier at the coupling area ensures a particular reliable reading of the touch pattern by the smart devices. To allow the user to only place the part of the touch pattern on the touch screen that comprises the touch points and conductive paths, the touch patterns of the prior art have been designed to encompass a coupling area at the border of the touch pattern. However, it may occur, e.g. by handling errors, that at least a part of the coupling area is placed on the touch screen itself which may interfere with the detection of the touch points and leads to an unstable detection of the touch pattern.
The design of the touch pattern in the prior art may furthermore put a constraint to the handling of the information carrier by the user. For instance, smart devices such as smart phones are commonly kept in protective cases, which form a framed elevation on the front side of the smart phone circumventing the touch screen. Thereby the case can prevent damages to the touch screen when the smart phone falls with its front side onto the ground. However, the framed elevation may hinder a flat placement of the touch pattern comprising the touch points on the touch screen, while the coupling area should not touch the touch screen.

In general, it would be advantageous if a capacitive information carrier can be placed entirely on the touch screen of the smart device, while a reliable detection of the touch pattern is still possible. In the prior art capacitive information carrier capable of doing so have not been disclosed. Moreover, it may be desired to be able to place multiple capacitive information carriers entirely on the touch screen, for instance for multi-player games on smart devices such as an iPad. With the capacitive information carrier of the prior art the positioning on the touch screen may be restricted.
Furthermore, it may be desired to remove a coupling area as known from the prior art, e.g. to realize smaller information carriers.

The objective of the invention was therefore to provide a system comprising a capacitive information carrier and a device comprising a capacitive surface sensor that overcomes the disadvantages of the prior art and allows for a particularly user-friendly usage, while ensuring a reliable detection of the information coded on the capacitive information carrier by the device. Another objective of the invention was to provide a method for detecting the information coded on the capacitive information carrier that ensures a fast and accurate decoding.

### Summary of the invention

The objective is achieved by a system and a method according to the independent claims. Advantageous embodiments result from the dependent claims.

The invention therefore relates to a system comprising:
a) a capacitive information carrier having at least one electrically conductive layer comprising at least two first electrically conductive areas, at least one second electrically conductive area and at least one third electrically conductive area arranged on an electrically non-conductive substrate
b) a device comprising a capacitive surface sensor, wherein
the first electrically conductive areas are of identical size, shape, dimension and/or area, wherein the shape of said first electrically conductive areas is that of an ellipse with a dimension of 1 mm to 20 mm, preferable 4 mm to 15 mm and more preferable 6 mm to 10 mm, the area of the second electrically conductive area is at least 20 % smaller than the area of one of the first electrically conductive areas, the third electrically conductive area connects at least one first electrically conductive area with at least one second electrically conductive area or at least two first electrically conductive areas and the capacitive information carrier is brought into contact with the capacitive surface sensor to generate at least one touch event on the device, while a conductive object is brought into contact with the second electrically conductive area.

In the context of the present invention it is preferred that the device comprising the capacitive surface sensor refers to smart devices that are capable of processing data and comprises a capacitive multi touch screen. In the context of the present invention the terms device, capacitive surface sensor device, surface sensor device or touch screen device are also used to refer to the device comprising the capacitive surface sensor. Such devices include, but are not limited to, touch pads, smart phones, PDAs, mp3 players track pads, television devices, touch displays, smart watches, tablet notebook, tablet computers and the like. The touch screens of these devices are preferably capable of sensing the change of capacitance, for instance, if a fingertip or a conductive object is brought in contact with the touch screen. Moreover, it is preferred that the touch screens are capable of sensing the touch input of multiple fingertips at the same time. The projected capacitance touch technology (PCT) is an exemplary technology that allows for a multi-touch user input. Advantageously, such touch screens are also particularly well suited to detect patterns of electrically conductive material.

A capacitive information carrier comprising an electrically conductive layer on a non-conductive substrate that is designed to have at least three electrically conductive areas as described above is particularly suited for an accurate detection by the smart device.

In the context of the invention the first electrically conductive area of the conductive layer preferably resembles in size, shape, dimensions and/ or conductivity the tip of a human finger. The first electrically conductive area is preferably referred to as a touch point. The term touch point and first electrically conductive area are therefore used synonymously in the context of the invention. It is moreover preferred that the shape of the touch points is that of an ellipse with a dimension of 1 mm to 20 mm, preferable 4 mm to 15 mm and more preferable 6 mm to 10 mm. The preferred size, shape, dimension and/ or area of the first electrically conductive areas, that is the touch points, is particularly suited for an accurate detection of the touch pattern by the device. A shape of a touch point as an ellipse with a dimension of 1 mm to 20 mm, preferable 4 mm to 15 mm and more preferable 6 mm to 10 mm resembles particularly well the dimension of a human fingertip. To this end it may be even more preferred that the touch points have the shape of nearly a circle with a diameter of 1 mm to 20 mm, preferable 4 mm to 15 mm and more preferable 6 mm to 10 mm. Touch points with the preferred dimensions can be particularly well detected by touch screens that have been optimized to detect human fingertips. The preferred dimensions of the touch points match therefore the grid spacing of electrodes sensing the change in capacitance used by current touch screen technologies. For applications that involve touch screens with differently spaced electrodes, the dimensions of the touch points are preferably adapted. Nevertheless, the dimensions mentioned above may also be altered based on the further development of capacitive multi touch screen technologies. Moreover, the elliptical shape as understood in the context of the invention does not have to be a strictly elliptical shape in the mathematical sense. Instead, the elliptical shapes and dimensions of the touch points according to the invention reflect the area with which a human fingertip may touch the touch screen and be detected by said touch screen. Hence it may also be preferred that the touch points have arbitrary shapes including, but not limited to, rectangles, triangles, rings, grids of conductive lines or any combination thereof. The elliptical dimension for these arbitrary shapes are preferably understood to mean that the touch points fit into an elliptical and/or circular disk with a dimension and/or diameter of preferable 1 mm to 20 mm, more preferable 4 mm to 15 mm and most preferable 6 mm to 10 mm and cover an area of preferably at least 20%, more preferably at least 60% and most preferably at least 80 % of the area of said elliptical and/or circular disk.

For the detection of the touch pattern it is advantageous if the shape and/or area of the touch points is identical. Herein, identical preferably means that the size, shape, dimension and/or area of the touch points are sufficiently similar that a touch screen preferably detects a similar size, dimension and/or area. For instance, a touch point shaped like a circle with a diameter of 8 mm would be considered identical in the context of the invention to a touch point of a roughly circular shape with a diameter of 8.3 mm or 7.7 mm.

In the context of the invention the second electrically conductive area of the conductive layer is preferably referred to an activation area. The activation area has an area, which is preferably smaller than the area of one touch point. It is particularly preferred that the conductive layer has two or more touch points, while the conductive layer comprises one activation area. Preferably, the area of the touch points is identical while the area of the activation area is smaller than the area of one touch point. In the context of the invention it is preferred that the activation area is at least 20% smaller, more preferably at least 30% smaller and most preferably at least 40% smaller than the area of a touch point. Moreover, for the preferred shape and dimensions of a touch point, shaped as an ellipse with a dimension of preferable 4 mm to 15 mm and more preferable 6 mm to 10 mm, the activation area exhibits preferably a dimension that is least 1 mm, preferably at least 2 mm and most preferably at least 3 mm smaller than the dimension length of the major axis of an ellipse of a touch point. Preferably the activation area has the shape of an ellipse with a dimension of 1 mm to 12 mm, more preferably 3 mm to 8 mm. The preferred size of the activation area depends on the dimension of the touch point. Moreover, different shapes for an activation area may be preferred. Such shapes include, but without being limited to, the shape of a star, a flower, a circle, an arrow and particularly preferred the shape of a fingerprint.

In the context of the invention the third electrically conductive area of the conductive layer is preferably referred to as a conductive path. In the context of the invention, the conductive path preferably resembles a line with a width of preferably less than 2 mm, more preferable less than 1 mm and most preferably less than 0.75 mm and connects at least one touch point with a second touch point or an activation area. The conductive path may represent a straight line and thus the shortest connection between two touch points or between an activation area and a touch point. However, it may also be preferred, that the conductive path does not represent the shortest connection between two touch points or between an activation area and a touch point, but the conductive path has the shape of a curved line, a zigzag line or other shapes that increase the length of the conductive path.

In the sense of the present invention, the capacitive information carrier preferably comprises an electrically conductive layer situated on an electrically non-conductive substrate. Preferred substrates are wood-based material, composite material, cardboard, paper, glass, ceramics, textiles, leather, plastics, synthetic material or any combination thereof. Particularly suitable synthetic materials for the substrate are preferably selected from a group comprising PVC, PETG, PP, PE, PC, PS, PETX, and synthetic paper. Preferably the substrate is light in weight, it may be transparent or non-transparent as well as flexible or rigid. In the sense of the present invention the electrically conductive layer is preferably made of an electrically conductive material selected from a group comprising metal particles or nanoparticles, e.g silver, gold, cooper, aluminum; electrically conductive particles, in particular carbon black, graphite, graphene, ATO (antimony tin oxide); electrically conductive polymer layer, in particular Pedot, PANI (polyaniline), polyacetylene, polypyrrole, polythiophene, pentacene or any combination thereof. However, other materials such as salts, electrolytes, inks, fluids and/ or any combination thereof may be possible as well. Preferably the electrically conductive layer is substantially flat, that is that large parts of the connected areas of the conductive layer lie within one plane and have no elevations. Particularly preferred, the conductive layer has a thickness of less than 100 µm, more preferred less than 20 µm and most preferred less than 1 µm. Moreover, it is preferred that the electrically conductive layer has an electrical surface resistivity or a specific surface resistivity of less than 1000 ohms/square, preferably less than 300 ohms/square and particularly preferably less than 50 ohms/square. Preferably, the layer of conductive material can be applied to the substrate by an additive, subtractive or semi-additive method, in particular by a printing or film transfer method. A person skilled in the art knows how to perform examples of these methods such as flexo-printing of a graphite or carbon layer, screen-printing a graphite or carbon layer or a silver conductive paste, etching of a copper layer or the transferring of aluminum by a cold foil transfer method onto the substrate. In particular, a person skilled in the art knows how to use these or other methods to create a layer of an electrically conductive material with the preferred properties on a substrate and to structure this layer to form a predefined pattern as conductive layer according to the invention disclosed herein.

In the context of the invention, a conductive layer comprising at least one touch point, at least one activation area and at least one conductive path, is preferably referred to as touch structure or touch pattern. It was completely surprising that a capacitive information carrier with a touch pattern according to the invention can be used in a very user-friendly way to accurately and efficiently transmit information from the information carrier to the device.

The electrically conductive layer of the information carrier is brought into contact with the touch screen, while a conductive object, which is preferably held by a user, touches the activation area. In the context of the present invention bringing the capacitive information carrier into contact with the device preferably means that the capacitive information carrier is brought close to the touch screen of the device, preferably in a distance that the touch screen detects changes in capacitance due to the presence of the conductive layer of the information carrier. Particular preferred the bringing the information carrier into contact with the device means that the capacitive information carrier touches at least partially, more preferably over the entire area of the conductive layer, the touch screen of the device. It is particularly preferred that the bringing into contact of the capacitive information carrier with capacitive surface sensor of the device means that all touch points and at least one activation area are brought in a distance close enough that the touch screen senses a change in capacitance due to the presence of the touch points and the activation area, while the activation area is touched by a conductive object. In the context of the invention the touching of the activation area preferably means that the conductive object touches the activation area directly and/or the conductive object touches the activation area indirectly e.g. through a transparent or non-transparent layer. In the context of the invention, the touching of the activation area by a conductive object preferably means that the conductive object and the activation area are set on the same electrical potential.

It is preferred that the activation area is galvanically connected by conductive paths to each touch point of the conductive layer. It may also be preferred that the activation area is connected indirectly to a touch point. In terms of the present invention indirectly means that two touch points are connected by a conductive path whereby just one of said touch points is connected to the activation area by a conductive path.

Preferably, the conductive layer constitutes a fully connected area.
By touching the activation area, the potential of the entire conductive layer is set onto the potential of the conductive object. As a consequence, the device interprets a change in capacitance close to the position of the touch points and the activation area on the touch screen. The change in capacitance generated by the conductive paths is not detected by the device. Due to their preferred width they do not generate a sufficient change to generate touch events.

Bringing the touch pattern according to the invention in contact with the touch screen of the device advantageously leads to the generation of one or more touch events on the device due to the change of capacitance at the position of the at least one touch point and the at least one activation area.

In the context of the present invention, a touch event is preferably a software event provided by the operating system of the device, whenever a parameter in the touch screen electronics is changing. The operating system of the device refers preferably to the software that communicates with the hardware of the device, in particular the touch screen, and allows other programs to run on the device. Examples for operating systems for devices comprising a capacitive surface sensor are Apple's iOS for the iPhone, iPad and iPod Touch or Android for operating a number of different smart phones, tablet computer or media players. Operating systems control and monitor the hardware of the device, in particular the capacitive surface sensor or the touch screen. Preferably, operating systems for the devices used in the method according to the invention provide touch events, when the change in the electronic parameters of the touch screen indicates that a fingertip is brought into contact with the touch screen, a fingertip is moving over the touch screen or a fingertip is removed from the touch screen.

It was surprising that by bringing a touch pattern according to the invention into contact with the touch screen of the device, while touching the activation area, touch events are generated that reflect accurately the positioning of the touch points on the touch screen. From the prior art information carriers are known which cause events on a touch screen when preferably only the touch points are brought into close contact with a touch screen. Based thereto they are preferably designed that the coupling area, which is needed to set the conductive layer onto the potential of a conductive object, is situated near the border of the capacitive information carrier. The conductive paths are designed to connect the touch points among each other and/ or to the coupling area but they are not supposed to trigger events on the touch screen. Furthermore, the coupling area known from prior art may be a substantially larger area than that of the touch points, for instance to ensure a convenient handling and user experience.

Thus, it was totally surprising that an information carrier can be provided which allows for an accurate detection of the touch points although a conductive object touches a part of the electrically conductive layer while being placed on the touch screen. This surprising effect is caused by the described activation area that is at least 20% smaller, more preferably at least 30% smaller and most preferably at least 40% smaller than the area of one touch point. It was totally surprising that even a smaller area than that of one touch point is suited to set the entire electrically conductive layer onto the potential of a conductive object. A person skilled in the art would assume that the coupling area needs to cover at least the area of one touch point. Thus, it was totally surprising, that an area of at least 20% smaller is suited to cause events on a touch screen and to set the electrically conductive layer onto the potential of a conductive object to detect the touch pattern.
Furthermore, tests have shown that an activation area comprising the same area as a touch point causes significantly higher capacitive impact on the touch screen compared to the touch points. By reducing the area of activation area this difference can be decreased which further contributes to a reliable, accurate and fast detection.

Another surprising effect of the invention is that even the touch event generated by the activation area is accurately determined by its position on the touch screen. This was surprising since methods in the prior art might not be able to accurately detect areas of the conductive layer that were touched by a user. The instability caused by a conductive object may have impeded an accurate detection. The invention disclosed herein overcomes these drawbacks by the preferred embodiments.

Moreover, an activation area that is at least 20% smaller than the area of one touch point, allows to reduce the amount of conductive material necessary to manufacture the touch pattern. Thereby the information carrier according to the invention can be produced cheaper than information carriers of the prior art.

In the context of the invention, the touch events generated by the touch points and/or the activation area can be advantageously processed to a data structure referred to as a touch data point. In the sense of the invention a touch data point is a data structure that preferably represents at least a pair of coordinates. This pair of coordinates preferably represents the position of a subset of the electrically conductive area on the touch screen. For the conductive layer according to the invention a touch data point preferably represents the position of the activation area and/or a touch point on the touch screen. The operating system of smart devices generates touch events that reflect the touch, the movement or the re-movement of a fingertip or a conductive object on the touch screen. For a conductive layer according to the invention the touch events preferably reflect the touch caused by the movement or the re-movement of the touch points and/or the activation area on the touch screen. The touch events can be advantageously processed to touch data points that accurately represent the position of a touch point and/or an activation area on the touch screen. Moreover, the processed touch data points may comprise additional parameters reflecting the properties of a touch point and/or an activation area such as a diameter, a width, a height, an elliptical minor- and major radius, a focal point or an eccentricity.

It is particularly advantageous if the touch data points representing the touch points comprise a parameter characterizing the dimension of the touch points. This can serve as computationally efficient selection criteria, since the dimensions of the touch data points representing touch points of identical shapes and/or areas are similar. Thereby it can be determined, whether a touch data point is processed from one or more touch events representing a touch point or another subset of the electrically conductive area or results from other signals. Moreover, this provides a particularly reliable detection to distinguish touch data points representing touch points from those representing an activation area.

Touch data points processed as outlined above therefore represent very accurately the information coded in the shape of the conductive layer of the capacitive information carrier. Based upon the detected touch data points, the pattern of the conductive layer can be for instance compared with little computational effort to predefined patterns stored on the device. The capacitive information carrier according to the invention can therefore be used for instance in authentication methods. An authentication may e.g. be granted only if the touch pattern detected by the device matches an expected pattern. Moreover, touch data points may be used to elicit multiple functions on the device. For instance, for playing on the device a user may control a game figure and/or other visualized elements of the game by placing and moving the touch pattern over the touch screen.

Moreover, the touch pattern according to the invention is 'activated' by touching the activation area. For example, when playing a game, one or more capacitive information carrier may be positioned on the touch screen. The touch pattern however will only be 'active' - i.e. detected by the device and leading to subsequent actions - if the activation area is touched with a conductive object. The possibility to activate the touch pattern while it is situated on top of the touch screen allows for a more flexible usage of capacitive information carriers than it was possible by means of the prior art. In particular, the user could also move the capacitive information carrier over the touch screen, while intentionally not touching the activation area. In this case, it may be preferred to activate the touch pattern only if the information carrier is on a desired position on the touch screen. This allows for a sophisticated and fast control of smart devices with capacitive information carriers that have not been described in the prior art. Moreover, temporal activation and deactivation, e.g. if the user removes the conductive object, allows for generating sequentially patterns that can serve as a particularly secure authentication code.

By the advantageous touch pattern, it is further possible to place the information carrier according to the invention entirely on the touch screen. Compared to the information carrier known from prior art that is usually more complex since the coupling area is typically situated at the border of a capacitive information carrier. This bears the potential for handling errors that might interfere with a reliable, fast and accurate detection. A system as described herein can avoid such handling errors. Last but not least it was totally surprising that more than two information carriers can be used at the same time on one touch screen. Moreover, since the information carrier can be placed entirely on the screen and freely moved, touch patterns can be used flexibly in all locations of the touch screen, including e.g. only the center of the touch screen. The user-friendly operation of the information carrier on the touch screen device is particularly advantageous while using multiple information carriers on the same touch screen.

Moreover, it may be preferred that the touch pattern comprises two or more activation areas. Depending on which activation area is touched by the user, the pattern of touch data points generated on the device is advantageously alterable. For instance, a capacitive information carrier may comprise a first and a second activation area, which are connected with conductive paths to three touch points. By touching the first activation area preferably four touch data points are generated on the device that represent the first activation area and the three touch points. In contrast by touching the second activation area preferably a different pattern of four touch data points is generated on the device that represents the second activation area and the three touch points. The relative coordinate positions of the two sets of these touch data points can advantageously be distinguished by the device and for instance be used to encode different functions. Thereby more complex series of functions can be assigned to a single capacitive information carrier. For instance it may be preferred that the touch pattern activated by a first activation area may authenticate the user for online shopping as a private person, while the second touch pattern represents an authentication code for business interactions of the user. Moreover, different activation areas may be used for example to switch between programs on the touch screen or different player functions in a game.
It is preferred that the two or more activation areas are not connected directly with each other via a conductive path. However, as the two or more activation areas are preferably connected to at least one identical touch point, the two or more activation areas are connected indirectly over conductive paths and said touch point. For the example above, when the first activation area is touched, the second activation area is also set onto the potential of the user. It was totally surprising that for activation areas that have an area that is at least 20 %, preferably at least 40 % smaller than the area of one touch point, the second activation area (the one that is not touched) does not elicit a touch event or elicits a touch event that can be clearly distinguished from touch events generated by the touch points and/or the first activation area.

It may also be preferred that the electrically conductive layer of the information carrier represents a disconnected area comprising connected subsets each of which comprises an activation area. By touching an activation area that is only galvanically connected to a subset of the touch pattern advantageously only this subset is activated on the device leading to the generation of touch data points. Thereby the number of touch patterns that can be selectively activated through the touch of a specific activation area can be increased allowing for the assignment of numerous different functions for one information carrier.

In another preferred embodiment the system is characterized in that the electrically conductive layer comprises at least three first electrically conductive areas and at least one second electrically conductive area that is situated within the convex hull spanned by said first electrically conductive areas. The term of a convex is hull is preferably understood in its common mathematical meaning. Therefore, the convex hull of a set of touch points is the smallest convex set that contains said touch points. The convex hull of the touch points spans preferably the shortest curve enclosing all of the touch points. In this preferred embodiment the activation area is situated within said convex hull spanned by the touch points. It is preferred that the activation area lies within the area that is enclosed by the convex hull of the touch points. It was surprising that such a position of the activation area allows for a particular reliable 'activation' of the touch pattern on the touch screen. That means by positioning the activation area within the convex hull spanned by the touch points, touch points elicit a particular homogeneous change of capacitance, when a conductive object touches the activation area. Such an activated pattern of touch points can be detected with a particularly high accuracy. Moreover, the position of the activation area with respect to the touch points can be preferably used to determine if the touch data point represents an activation area or a touch point.
For conductive layers comprising more than three touch points it is preferred that the convex hull is spanned by all touch points whereby just the at least one activation area lies inside the hull. Moreover, it may also be preferred that at least one touch point is situated within the hull as well.

In another preferred embodiment the system is characterized in that the area spanned by the convex hull of the electrically conductive layer is smaller than 85%, preferably smaller than 70% and most preferably smaller than 40% of the area of the capacitive surface sensor. In this case the convex hull of the electrically conductive layer refers to the smallest convex set that contains all subsets of the electrically conductive layer. It therefore preferably refers to the shortest curve that encloses the entire electrically conductive layer. For a convex hull of the electrically conductive layer that is smaller than 85% and preferably smaller than 70% of the area of the capacitive surface sensor the entire electrically conductive layer can be preferably conveniently placed onto the touch screen of the device. It may be preferred that the electrically conductive layer is applied to a flat substrate, e.g. a trading card or an access ticket. However other materials and objects, which can have a flat shape, may also be suited, e.g. the panel of a package. If for instance the package is opened, the entire conductive layer applied on the panel can be placed substantially flat on the touch screen and is activated by touching the activation area. It is moreover preferred that the area spanned by the substrate, in which the electrically conductive layer is embedded, is not substantially larger than the electrically conductive layer. It is particularly preferred that the entire capacitive information carrier comprising the electrically conductive layer can be conveniently placed on the touch screen. Due to the touch pattern according to the invention this allows for a particular user-friendly usage of the capacitive information carrier to interact with touch screen devices. With capacitive information carriers in the prior art that might not be possible without interfering the detection of the touch pattern. As described above information carriers of the prior art comprise coupling areas that are typically held by a user, while operating the information carrier on the device. However in this procedure, the coupling area of the prior art had to be kept in a sufficient distance of the touch screen in order to not disturb the detection of the touch points.

It was totally surprising that by introducing an activation area according to the invention these disadvantages can be overcome. Due to the reduced size of the activation area the user can touch the activation area, while it is positioned on the screen, thereby enervating the touch pattern. This ensures a particular comfortable handling of the capacitive information carrier and optimizes the transmission of information. This is in particular true for information carriers with the above mentioned sizes in relation to the touch screen. By placing the information carrier entirely on the touch screen it can be moved conveniently to different locations on the touch screen using a conductive object or a single finger. Herein the touch pattern may be selectively 'activated', i.e. detectable by the device, depending on whether the conductive object or finger touches the activation area or not.

Moreover, the information carrier disclosed herein ensures a reliable and fast detection even if the touch screen device is kept in a protective case. Typically, protective cases exhibited a framed elevation circumventing the touch screen to prevent damages in case the device falls onto the ground. It is known from the prior art that such cases may hinder a flat placement of the touch pattern, in particular the touch points, on a touch screen. This is due to the typical layout of touch patterns known from prior art, wherein the coupling area needs to be touched by a user, but is not supposed to be brought into contact with the touch screen. Therefore a protective case could hinder a flat placement of those electrically conductive areas on the touch screen that are connected with the coupling area and shall cause touch events. An information carrier that is smaller than said touch screen and is activated by touching an activation area overcomes this disadvantage easily since the entire conductive layer can be placed fully on the screen. Furthermore, the activation area is preferably touched, while the entire conductive layer is substantially flat on the screen. When using figurative language this could be described as pressing the entire conductive layer to the touch screen so that there is no space between the information carrier and the touch screen, thereby enabling a surprisingly fast, secure and reliable detection.

Furthermore, it may be preferred that the convex hull of the electrically conductive layer is at least smaller than 40% of the area of the capacitive surface sensor. For such information carriers it is preferably possible that two information carriers may be placed on the same touch screen. This allows for a more sophisticated interaction of the user with the touch screen by controlling multiple information carriers. For instance, a user may be able to control two game figures in a game on a touch screen device by moving two capacitive information carriers over the touch screen. It may also be possible that two users play against each other, wherein each user moves one information carrier over the touch screen. Advantageously each of the information carriers of the two users may comprise different touch patterns encoding for supplemental information e.g. a personalized game figures, credits from previous games etc. This is further supported by the general working principle for the information carrier described. The possibility to 'active' a touch pattern only when the activation area is touched with a conductive object allows for a more flexible usage of capacitive information carriers than it was possible by means of the prior art. In particular, the user could also move the capacitive information carrier over the touch screen, while intentionally not touching the activation area. It may be preferred in this case to activate the touch pattern only once the information carrier is on a desired position on the touch screen. This allows for a sophisticated and fast control of smart devices with capacitive information carriers that have not been described in the prior art. Moreover, temporal activation and deactivation, e.g. if the user removes the conductive object, allow for generating sequentially patterns for instance for a complex temporal control of game figures.

Moreover, in this preferred embodiment, the conductive layers of the information carriers are designed considerably smaller than it has been described in the prior art. Therefore, the preferred sizes of the touch patterns in relation to the touch screen, allow to reduce the necessary material to manufacture the touch pattern. The preferred information carrier is therefore more cost-effective than capacitive information carriers of the prior art, while providing the possibility of encoding more informational content and therefore allowing for more functional complexity.
A further advantage may be to reduce the size needed for the entire conductive layer, thereby bearing the option to realize smaller information carriers as known by prior art. This is due to the fact that no coupling area needs to be integrated to activate a touch pattern.

In a further preferred embodiment the system is characterized in that the area of the second electrically conductive area is at least 10%, more preferably at least 20 % of the area of one of the first electrically conductive areas. It is particularly preferred that the activation area has an area of at least 5 mm². In the context of the invention it may be possible that an activation area has an area as small as 1 mm² and for instance is formed by the conductive path and/or the crossing of two conductive paths. However, it was surprising that an activation area of the above mentioned dimensions leads to a more reliable activation of the touch pattern compared to smaller activation areas e.g. formed by conductive paths. The preferred dimension of the activation area advantageously leads to a particularly stable activation of the touch pattern. In this case the conductive object e.g. a fingertip, is constantly in contact with the conductive pattern while touching the activation area. For smaller activation areas as e.g. a conductive path, the fingertip may temporarily loose the contact to the activation area, thereby leading to a more unstable detection of the touch pattern.

In a particularly preferred embodiment the system is characterized in that the second electrically conductive area has the shape of an ellipse with a dimension of 1 mm to 12 mm, preferably 3 mm to 8 mm. These dimensions lead to a particularly stable activation of the touch pattern, which can be reliable detected by the device. The preferred dimensions are particularly advantageous for the generation of a stable touch data point representing an activation area that is being touched. In this case slight movements of the conductive object with respect to the activation area advantageously do not result in substantial changes of the position of the corresponding touch data point. Instead the elliptical shape of the activation area leads to a capacitive change detected by the touch screen that is close to the center of the touched activation area. It was surprising that activation areas of the above mentioned dimensions in particular for ellipses with a diameter of 3 mm to 8 mm constitute an optimal compromise of an activation area that is small enough to avoid interference with the detection of the touch points, while being large enough to generate stable touch data points presenting the position of the activation area on the touch screen if touched.

In a further preferred embodiment the system is characterized in that the conductive object is a human fingertip and/or a stylus. It is preferred that a user activates the touch pattern by touching the activation area with his or her fingertip. Thereby as described above the touch pattern and in particular the touch points are advantageously set onto the potential of the user. By connecting the human body capacitance to the touch pattern, the touch pattern and in particular the activation area and the touch points elicit a capacitive change on the touch screen that is readily detected by device. Activating the touch pattern by using a fingertip is particularly convenient and intuitive for a user. It may however be also preferred that the conductive object is a stylus. In the context of the invention the stylus may be preferably any stylus that is conductive and suited to be moved over the touch screen in a convenient manner. It may be preferred that the stylus is a touch pen or a touch stylus, which comprise special tips optimized for the detectability by touch screens. But advantageously this is not necessary, as the device reads the extended conductive pattern of the activation area and/or the touch points. Preferably the stylus is held and operated by a user. Thereby it is not necessary for the user to touch the touch screen directly with a fingertip. This may be desired for example for hygienic reason. Furthermore, in case the finger is wet, a precise activation of the touch pattern may be impeded by a disturbing signal from a fluid film extending beyond the fingertip. Likewise, if the user wears electrically isolating gloves the touch pattern can still be reliably activated without the need to remove said gloves. Advantageously touching of the activation area with a number of different conductive objects, of which a human fingertip and a stylus are preferred embodiments, lead to the preferred activation of the touch pattern. This can be exploited for capacitive information carriers used e.g. in the industry to control different machines via a touch screen interface. In this case the conductive object may also be part of an automated robot that activates touch patterns controlling machines, without the need of a human input.

In a further preferred embodiment the system is characterized in that the distance between the second electrically conductive area and each of the first electrically conductive areas is at least 6 mm, more preferred at least 8 mm and most preferred at least 10 mm. The preferred distances between the activation area and any of the touch points lead to a particular well capacitive coupling of the touch points with the touch screen. By touching an activation area with a conductive object the touch points are homogenously set on the potential of the conductive object. At the same time local changes in capacitance due to movements of the conductive object on the activation area do not compromise the detection of the touch points. Moreover it is preferred that the distance between two touch points is at least 4 mm, more preferred at least 6 mm and most preferred at least 8 mm. Thereby touch points are preferably placed at a closer distance compared to the preferred distances between an activation area and a touch point. Preferably the distances mentioned ensure that the activation area as well as each touch point generates single touch events which can be processed to separate touch data points, representing exactly one activation area or one touch point.

In a further preferred embodiment the system is characterized in that the electrically conductive layer is completely or partly covered by a transparent or non-transparent layer. Such a covering of the electrically conductive layer may be desired to protect the touch pattern and/or to augment the optical appearance of the capacitive information carrier. The information coded in the capacitive information carrier is detected by a touch screen device via capacitive coupling. Advantageously the electrically conductive layer may therefore be completely or partly covered by a transparent or non-transparent layer without disturbing the detection the touch pattern. The transmission of the information from the capacitive information carrier to the device is in contrast to other methods of the prior art, e.g. bar codes, advantageously not dependent on the visibility of the touch pattern. Preferred materials that may transparently cover the conductive layer comprises but without being limited to transparent varnishes, plastics, inks or any combination thereof. It may be further preferred to overprint the entire electrically conductive layer by another four-color-printing and/ or a varnish. In particular it is possible to design colorfully imprinted capacitive information carriers that appeal to the consumer. Advantageously the choice of decoration of the capacitive information carrier is not limited by technical constraints.

In a further preferred embodiment the system according the invention is characterized in that the capacitive information carrier comprises a visual marker that marks the position of the second electrically conductive area. By visually marking the at least one activation area the user is advantageously prompted to touch the activation area while bringing the information carrier into contact with the capacitive surface sensor of the device. Marking the activation area may efficiently avoid the touching of other subsets than the activation area with a conductive object. Thereby the visual marker highly supports the desired usage of the capacitive information carrier. A preferred visual marker is a symbol selected from a group of, but without being limited to, circles, arrows, stars, flowers and/or fingerprints. For example these symbols may be printed on a non-transparent layer that covers the electrically conductive layer. These symbols are particularly successful in raising the attention of a user and motivating the user to touch the activation area. Moreover it was surprising that these symbols are particular well suited to prompt a stable positioning of the conductive object on the center of the activation area, which preferably additionally increases the detection accuracy.

In a further preferred embodiment the system is characterized in that the electrically conductive layer is partially covered by a transparent or non-transparent layer, so that the entire electrically conductive layer is covered except for the second electrically conductive area. In this preferred embodiment the activation area is visually marked by the absence of a transparent or non-transparent layer on top of the activation area. This visual mark of the activation area in contrast to other subsets is particularly pronounced if the activation area is shaped as a star, a flower, a circle, an arrow or particularly preferred a fingerprint. It was surprising that these shapes not only effectively prompt the user to touch the activation area, but also elicit by a single touch a particular stable and homogenous distribution of the electrical potential throughout the conductive layer. Moreover, by omitting the coverage of the activation area with a transparent and/or a non-transparent layer, the conductive objective is advantageously able to directly touch the activation area. This allows for a particular fast equalization of the electrical potential of the activation area and the conductive object. In this preferred embodiment touching the activation area directly that is not mediated by a transparent or non-transparent layer, allows to set the conductive layer on the potential of the user in a particularly reliable manner.

The invention also relates to a method for transmitting information from a capacitive information carrier to a device comprising a capacitive surface sensor, comprising
a) providing the capacitive information carrier comprising an electrically non-conductive substrate on which at least one electrically conductive layer is situated comprising at least one first electrically conductive area resembling in size, shape, dimension and/or conductivity a human fingertip, at least one second electrically conductive area and at least one third electrically conductive area, that connects at least one first electrically conductive area with at least one second electrically conductive area or at least two electrically conductive first areas
b) providing the device comprising the capacitive surface sensor
c) bringing the capacitive information carrier into contact with the capacitive surface sensor, while a conductive object touches the second electrically conductive area, whereby at least two touch data points are generated on the device.

Technical features that have been disclosed for the system according to the invention preferably also apply for the method according to the invention. A person skilled in the art will therefore recognize that preferred features of the system according to the invention can be advantageously used as well in the context of the method according to the invention. For instance, in the method according to the invention, the device comprising the capacitive surface sensor is provided. For the system according to the invention preferred devices include without being limited to smart phones, tablet computers, touch pads, smart watches, PDA's, mp3 players and the like. Such touch screen devices are therefore preferably also provided and used for the method according to the invention. Likewise for example preferred embodiments of the capacitive information carrier disclosed are preferably used in the method according to the invention. It is therefore particularly preferred that the method according to the invention uses a system according to the independent claim and preferred embodiments of said system. Moreover, surprising technical effects disclosed for features of the system can be advantageously exploited in the method according to the invention.

Preferably the method provides a capacitive information carrier comprising at least one touch point, at least one activation area and at least one conductive path that connects at least two touch points with each other or at least one touch point with at least one activation area. While bringing the capacitive information carrier into contact with the capacitive surface sensor of the device, the conductive object touches the activation area. As described for the system this advantageously sets the conductive layer of the information carrier to the same potential as of the conductive object, preferably held by a user. Thereby the capacitive surface sensor of the device, preferably a touch screen, detects a change in capacitance at the positions of the touch points and the activation area on the touch screen, similar to the change in capacitance if a human fingertip would touch the touch screen at these positions. It is preferred that the change in capacitance is sufficiently high that a touch event is generated on the device. These touch events, as described for the system, advantageously represent the touch, the moving and or the re-moving of the touch points and/or the activation area on the touch screen. These touch events can be advantageously processed to touch data points that accurately represent the position of a touch point and/or an activation area on the touch screen. Moreover the processed touch data points preferably comprise additional parameters reflecting the properties of a touch point and/or an activation area such as a diameter, a width, a height, an elliptical minor- and major radius, a focal point or an eccentricity. Preferably, touch events can be one of the following types: a touchstart, a touchmove, a touchend or a touchcancel. It is preferred that a touchstart can create a touch data point. For example, when the activation area is touched by the conductive object, preferably a touchstart creates at least one touch data point at the position of a least one touch point and one touch data point at the position of at least one activation area on the touch screen. A touchmove preferably changes parameters of a touch data point. For example, if the touch pattern is moved over the touch screen, while the activation area is in contact with the conductive device, a touchmove preferably relates to the change of the position of the touch data points representing the at least one touch point and the at least one activation area on the touch screen. A touchend or a touchcancel can terminate a touch data point. For example, the capacitive information carrier may have been placed on the touch screen, while the activation area is touched by a conductive object. Therefore touch data points have been created that preferably represent the position of the at least one touch point and at least one activation area on the touch screen. A releasing of the conductive object from the activation area may generate a touchend that terminates all touch data points. In particular, a touch event can also affect one or more touch data points, for instance one touchmove can describe the change of parameters in one or more touch data points.

As outlined for the system the method according to the invention advantageously allows for a particular user-friendly transmission of information from the capacitive information carrier to the device. In particular, the entire touch pattern may be preferably placed on the touch screen and controlled, while touching the activation area. A holding of a coupling area as described in the prior art is not necessary. The method is therefore more intuitive and flexible in its use than methods of the prior art.

In the method according to the invention advantageously at least two touch data points are generated. These touch data points preferably represent the at least one touch point and the at least one activation area.

In a preferred embodiment the method is characterized in that the at least two touch data points are assigned to at least one first touch data point, representing the coordinate position of a first electrically conductive area on the capacitive surface sensor, and to at least one second touch data point, representing the coordinate position of the second electrically conductive area on the capacitive surface sensor.

The preferred method can distinguish, which touch data points reflect the position of the at least one touch point on the touch screen and which touch data points represents the position of the at least one activation area on the touch screen. The method preferably assigns the touch data points to at least two different categories, one category for touch data points representing the one or more touch points and one category for touch data points representing the one or more activation areas. By doing so the method allows for a particular flexible way of interpreting the information from the capacitive information carrier. In particular the method allows to include the set of touch data points reflecting the activation area in an interpretation of the touch pattern or alternatively only use the set of detected touch data points representing touch points for subsequent processes.

In a preferred embodiment the method is characterized in that the at least one touch data point representing the at least one first electrically conductive area is used to decode the information provided by the capacitive information carrier. Herein, the information of the capacitive surface sensor is decoded, i.e. detected and processed by the device, by taking into account the touch data points representing touch points. It may furthermore be preferred that the touch data points representing an activation area are not included in this procedure. The touch data points representing the activation area may in general be more instable in terms of their coordinate positions and/or the detected dimensions. This results from potential changes of the position and pressure of the conductive object on the touch screen.

Advantageously, by omitting the touch data points representing the activation area, a pattern of touch data points representing only touch points can be used for subsequent functions. This may be desired for applications requiring a stable pattern of touch data points in terms of relative coordinate positions and/or dimensions of each touch data point. This is for example advantageous for authentication methods, in which the touch patterns need to be decoded fast and very accurate compared to expected patterns. By using only the particularly stable touch data points representing touch points, the selection criteria for matching a detected pattern to an expected pattern can be chosen strictly. This allows for a particular secure authentication method.

However, it may also be preferred that the touch data points representing the activation area are included in the interpretation of the touch pattern. In this case preferably the method is characterized in that at least one touch data point, representing the at least one first electrically conductive area, and at least one touch data point, representing the at least one second electrically conductive area, are used to decode the information provided by the capacitive information carrier. This allows for a particular high flexibility of transmitting information to the device. For instance, the touch pattern may comprise two or more activation areas. Depending on which of the activation areas is touched, the information from the capacitive information carrier is decoded differently by the device. Thereby the method allows the user simply by touching different activation areas to select different touch patterns.
For instance, the touch pattern may comprise five touch points and three activation areas. A touching of a first activation area by the user preferably leads to the generation of a touch pattern on the device that comprises five touch data points representing the touch points and one touch data point representing the first activation area. It may further be preferred that each of the three activation areas have an area that is at least 20% smaller than the area of one touch point. Advantageously in this case only one touch data point for the activation area that is touched, i.e. the first activation area, is generated, but no touch data points are generated for the second and third activation area. If the user decides however to touch the second or the third activation area, a different pattern of touch data points is generated on the device, representing the five touch points and the second or the third activation area. This allows for a particular flexible way of creating different touch patterns representable to the device. Including the touch data point representing an activation area is particular advantageous for applications that do not need the same high stability of touch data points as e.g. in the context of an authentication for online banking. While slightly compromising the stability of the pattern of touch data points, the inclusion of touch data points representing the activation area allows for increased flexibility that can be advantageously exploited for example for controlling computer games or multifunctional control of programs on the device. Each of the different touch patterns may be assigned to a different function and create a particularly user-friendly interface for controlling software on the smart device. It was totally surprising that the information carrier disclosed herein can be used in this convenient manner for multiple actions.

In a further embodiment it is preferred to alter the detection principle, e.g. based on time, date, location of the device and the like. For instance, a capacitive information carrier is detected by taken into account only the touch data points representing the first electrically conductive area. After a predetermined time this changes so that the touch data points representing the touch points and the activation area are considered.

In a preferred embodiment the method is characterized in that the touch data points are assigned by their position and/ or temporal stability of their position. The coordinate position of the touch data points representing the activation area may depend on the positioning of the conductive object on top of the activation area. For instance, if a human fingertip is placed slightly off-centered above the activation area, the coordinates of the corresponding touch data point reflect this shift. In addition, if for instance the fingertip moves slightly and/or the pressure exerted by the fingertip is altered, the coordinate position of the corresponding touch data points change. By considering these instabilities, the coordinate position of the activation area can be detected accurately as well. It was totally surprising that even an activation area can be reliable detected when these characteristics are considered.
The relative coordinate position of touch data points representing touch points is not influenced by these instabilities. If the touch of the user leads to an intentional or unintentional movement of the entire touch pattern on the touch screen, the absolute coordinate position of each touch data point will reflect the movement of the entire pattern. However, the relative coordinates position, or preferably the distance to one or more of the other touch data points, remains the same for touch data points representing touch points. Thereby a movement will not interfere an accurate detection.

Furthermore it is preferred that touch data points are assigned to represent an activation area or a touch point based upon their position with respect to the other touch data points. In this case the distinguishing criteria is not the temporal stability of the relative position, but the relative position of the touch data points within the touch pattern. As outlined for the system, a preferred embodiment of the touch pattern is that the touch pattern comprises at least three touch points and at least one activation area that is situated within the convex hull spanned by the three touch points. It may furthermore be preferred that no touch point lies within the convex hull spanned. This preferred design rule poses a distinct condition for the relative position of the activation area within the touch pattern. This may be advantageously exploited by the preferred method. By determining the convex hull of the entire set of touch data points it is preferably possible to determine at least one touch data point that is situated not on the convex hull, but lie within the area that is enclosed by the convex hull. For the preferred design rule described above these touch data points are assigned to represent the at least one activation area.

In a further preferred embodiment of the invention the method is characterized in that the touch data points are assigned by their dimensions and/ or temporal stability of their dimension. It is preferred that the touch points are identical in terms of size, shape, dimension and/or area. It is further preferred that the touch data points comprise in addition to a pair of coordinates representing the position of a touch point and/or an activation area on the touch screen a parameter characterizing the dimension, most preferably the diameter, of the touch point and or the activation area. Therefore, advantageously touch data points representing the touch points comprise dimensional parameters, preferably diameters that are similar. The dimensional parameter characterizing the capacitive interaction of the activation area with the touch screen not only depends on the size, shape, dimension and/or area of the activation area, but in addition on the conductive object touching. For example in case the activation area is smaller than the diameter of the surface of a touching fingertip as a preferred conductive object, the dimensional parameter of the corresponding touch data point represents the surface of the touching fingertip and not the size of the activation area. Fingertips differ in size and the surface of the fingertip on the touchscreen moreover depends on the pressure exerted by the fingertip. It is therefore advantageously possible to distinguish touch data points reflecting a touch point or an activation area by comparing the diameter of the touch data points. The touch data points that deviate substantially from the median diameter are preferably assigned to reflect an activation area.

Moreover, as pointed out above, the diameter of a touch data point representing an activation area preferably depends on the size of the surface of the conductive object that physically touches the touch screen. Changes in that surface, e.g. if the conductive object is tilted or a fingertip exerts a different pressure, result in a change of the dimensional parameter of the corresponding touch data points. It is therefore advantageously possible to distinguish touch data points by the temporal stability of their dimension. Touch data points for which the dimensional parameter changes over time by preferably more than 5% are preferably assigned to represent activation areas.

It should be understood that various alternatives to the embodiments of the invention described herein may be employed in practicing the invention. It is intended that the claims of the invention define the scope of the invention and that the method and apparatus within the scope of these claims and their equivalents be covered thereby.

Without intending to be limiting, the invention will be explained in more detail with reference to examples.

### Brief description of the drawings

- Fig. 1A - 1F: Schematic drawing for preferred embodiments of a capacitive information carrier comprising an activation area.
- Fig. 2: Schematic drawing for a preferred embodiment of the system in which a user activates the touch pattern on a touch screen device by touching the activation area with a fingertip.
- Fig. 3: Schematic representation of a preferred embodiment of the system in which multiple capacitive information carriers are used for transmitting information to a touch screen device.

### Detailed description of the figures

For all figures it is noted that for clarity reasons the substrate material onto which the conductive layer, in particular the touch pattern is applied, is not shown.

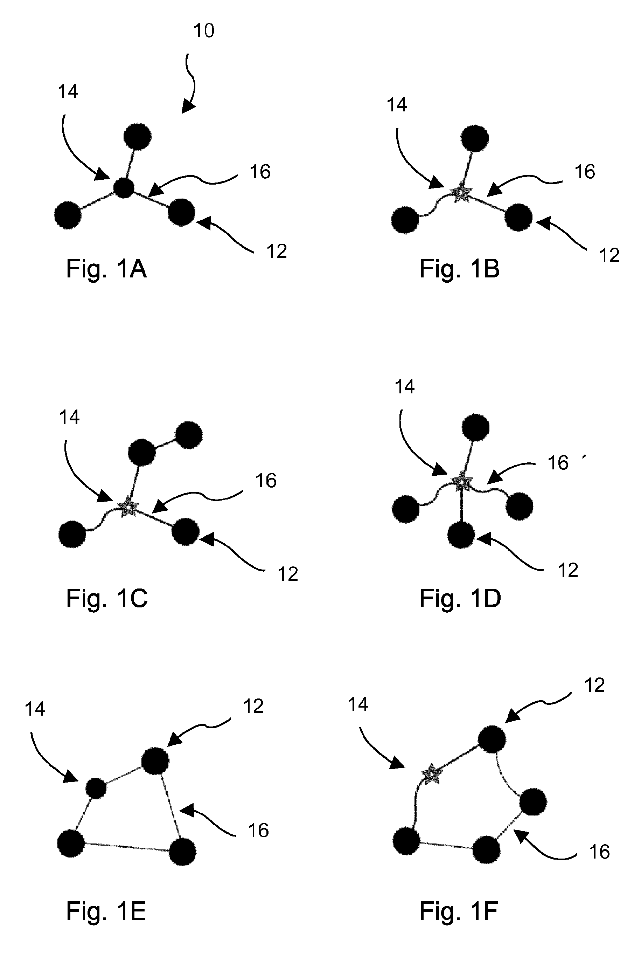

Figures 1 A - F displays several preferred touch patterns (10), which comprise touch points (12), an activation area (14) and conductive paths (16). Fig. 1A shows a preferred embodiment of a touch pattern (10), wherein the activation area (14) is situated within the convex hull spanned by the three touch points (12) of the touch pattern (10). Each of the three touch points (12) is connected to the activation area (14) via a conductive path (16). In this preferred embodiment the activation area (14) has a circular shape with a diameter smaller than the diameter of the circular shaped touch points (12).

Fig. 1B displays a preferred embodiment of a touch pattern (10), wherein the activation area (14) is situated within the convex hull spanned by the three touch points (12) of the touch pattern (10). Each of the three touch points (12) is connected to the activation area (14) via a conductive path (16). However, in this preferred embodiment two of the conductive paths (16) are straight lines, while one conductive path (16) is a curved line. In this preferred embodiment the shape of the activation area (14) is that of a star, with an area smaller than the area of one of the circular shaped touch points (12).

Fig. 1C displays a preferred embodiment of a touch pattern (10), wherein the activation area (14) is situated within the convex hull spanned by the four touch points (12) of the touch pattern (10). Three touch points (12) are directly connected to the activation area (14) via a conductive path (16). Three of the four conductive paths (16) are straight lines, while one conductive path (16) is a curved line. A fourth touch point (12) is only connected via a conductive path (16) to a touch point (12), but not to the activation area (14). This fourth touch point (12) is connected indirectly via a touch point (12) and a conductive path (16) to the activation area (14). In this preferred embodiment the shape of the activation area (14) is that of a star, with an area smaller than the area of one of the circular shaped touch points (12).

Fig. 1D displays a preferred embodiment of a touch pattern (10), wherein the activation area (14) is situated within the convex hull spanned by the four touch points (12) of the touch pattern (10). Each of the four touch points (12) is directly connected to the activation area (14) via a conductive path (16). Two of the four conductive paths (16) are straight lines, while the other two conductive paths (16) are curved lines. In this preferred embodiment the shape of the activation area (14) is that of a star with an area smaller than the area of one of the circular shaped touch points (12).

Fig. 1E displays a preferred embodiment of a touch pattern (10), wherein the activation area (14) is not situated within the convex hull spanned by the three touch points (12) of the touch pattern (10). A first and a second touch point (12) are directly connected to the activation area (14) via a conductive path (16). A third touch point (12) is only connected via a conductive path (16) to the first and second touch point (12) respectively, but not to the activation area (14). The third touch point (12) is connected indirectly via a touch point (12) and a conductive path (16) to the activation area (14). All of the four conductive paths (16) are straight lines. In this preferred embodiment the activation area (14) has a circular shape with a diameter smaller than the diameter of the circular shaped touch points (12).

Fig. 1F displays a preferred embodiment of a touch pattern (10), wherein the activation area (14) is not situated within the convex hull spanned by the four touch points (12) of the touch pattern (10). A first and a second touch point (12) are directly connected to the activation area (14) via conductive paths. (16). A third and a fourth touch point (12) are only connected via a conductive path (16) to the first and second touch point (12) respectively, but not to the activation area (14). The third and fourth touch point (12) are however connected indirectly via a touch point (12) and a conductive path (16) to the activation area (14). Three of the conductive paths (16) are straight lines, while two conductive paths (16) are curved line. In this preferred embodiment the activation area (14) has the shape of a star with a diameter smaller than the diameter of the circular shaped touch points (12).

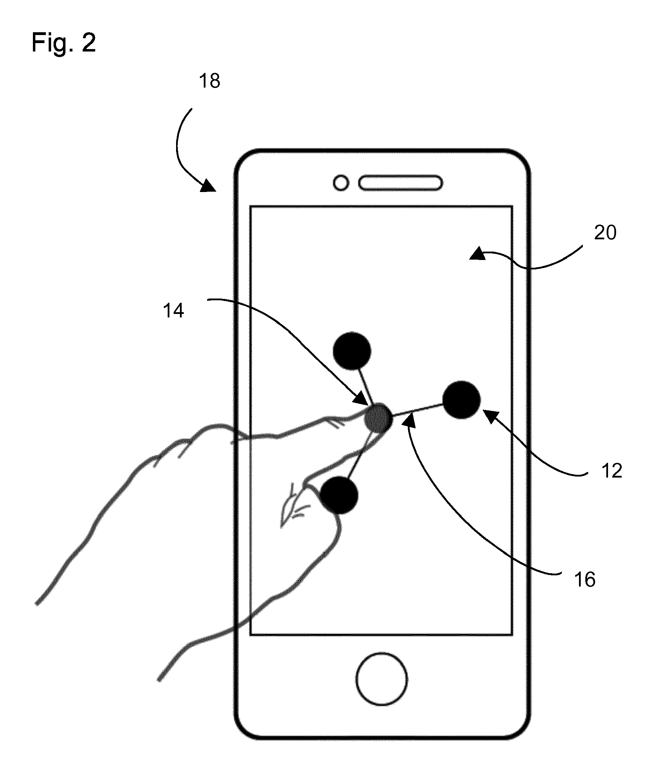

Fig. 2 shows a schematic representation of a preferred system comprising a device (18) comprising a touch screen (20) and the information carrier comprising a touch pattern (10). By touching the activation area (14) with a fingertip the user activates the touch pattern (10). The touch pattern (10) comprises the activation area (14) as well as three touch points (12), which are directly connected via conductive paths (16) to said activation area (14). Advantageously by touching the activation area (14) the entire touch pattern (10) is set onto the potential of the user. This results in a local change of capacitance at the position of the touch pattern (10) on the touch screen (20), which can be detected by the device (18). In particular, at the position of the touch points (14), but not of the conductive paths (16), a local change in capacitance is elicited that resembles that of a human fingertip touching the touch screen (20). A hence 'activated' touch pattern (10) is read by the device (18) as a multi-touch finger input. The detected capacitive change at the position of the touch points (12) generates touch events, which are processed to touch data points representing the position and/or dimension of the touch points (12) on the touch screen (20). Preferably the touch events generated at the position of activation area (14) are also processed to a touch data point representing the position and/or dimension of the activation area (14). Preferably it is further possible to distinguish, which of the generated touch data points represent the activation area (14) and which represent one of the three touch points (12). The inclusion of the touch data point representing the activation area (14) results in a detected and processed touch pattern that is similar to a four finger multi-touch at the position of the three touch points (12) and the activation area (14) on the touch screen (20). The omission of the touch data point representing the activation area (14) results in a detected and processed touch pattern (10) similar to that of a three finger multi-touch at the position of the touch points (12) on the touch screen (20).

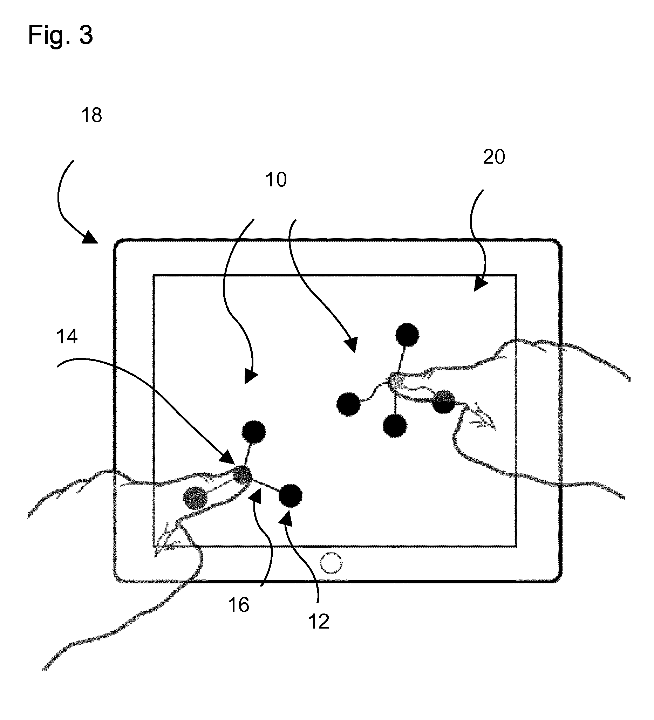

Fig. 3 displays a preferred embodiment of the system comprising a touch screen device (18) on which two information carriers comprising a touch pattern (10) are operated simultaneously. In this preferred embodiment the size of the information carrier and the touch pattern (10) is sufficiently small in comparison to the touch screen (20) so that both information carriers can be conveniently placed on the touch screen (20). In the depicted embodiment the first touch pattern (10) comprises three touch points (12) and an activation area (14), while the second touch pattern (10) comprises four touch points (12) and an activation area (14). By touching the corresponding activation area with a fingertip the user can separately or simultaneously activate each touch pattern (10). For the depicted simultaneous activation of both touch patterns (10) the touch screen device (18), detects the interaction as a multi-touch finger input of 9 fingertips. Depending on whether the touch data points representing the activation areas are included or not it is possible to differentiate the touch patterns as a four- or five and a three- or four-finger multi-touch. In sum this may enable a differentiation of a 7, 8 or nine finger multi-touch input. Current touch screen tablets are optimized for a multi-touch input of 11 fingertips and can therefore detect up to 11 touch points (12) or activation areas (14). The current design of touch patterns (10) and the detection software reflects these characteristics, but may be adapted accordingly for future developments in the software and hardware of smart devices.

### List of reference numbers

- 10: touch pattern
- 12: touch point
- 14: activation area
- 16: conductive path
- 18: device comprising a touch screen
- 20: touch screen

## Claims

1. A System comprising
a) a capacitive information carrier having at least one electrically conductive layer comprising at least two first electrically conductive areas, at least one second electrically conductive area and at least one third electrically conductive area arranged on an electrically non-conductive substrate
b) a device comprising a capacitive surface sensor,
**characterized in that**
the first electrically conductive areas are of identical size, shape, dimension and/or area, wherein the shape of said first electrically conductive areas is that of an ellipse with a dimension of 1 mm to 20 mm, preferable 4 mm to 15 mm and more preferable 6 mm to 10 mm, the area of the second electrically conductive area is at least 20% smaller than the area of one of the first electrically conductive area, the third electrically conductive area connects at least one first electrically conductive area with at least one second electrically conductive area or at least two first electrically conductive areas and the capacitive information carrier is brought into contact with the capacitive surface sensor to generate at least one touch event on the device, while a conductive object is brought into contact with the second electrically conductive area.

2. The system according to any one of the preceding claims,
**characterized in that** the electrically conductive layer comprises at least three first electrically conductive areas and at least one second electrically conductive area that is situated within the convex hull spanned by said first electrically conductive areas.

3. The system according to any one of the preceding claims,
**characterized in that** the convex hull of the electrically conductive layer is smaller than 85% of the area of the capacitive surface sensor, preferably smaller than 70% and most preferably smaller than 40% of the area of the capacitive surface sensor.

4. The system according to any one of the preceding claims,
**characterized in that** the area of the second electrically conductive area is at least 10%, more preferably at least 20 % of the area of one of the first electrically conductive areas.

5. The system according to any one of the preceding claims,
**characterized in that** the second electrically conductive area has the shape of an ellipse with a dimension of 1 mm to 12 mm, preferably 3 mm to 8 mm.

6. The system according to any one of the preceding claims,
**characterized in that** the conductive object is a human fingertip and/or a stylus.

7. The system according to any one of the preceding claims,
**characterized in that** the distance between the second electrically conductive area and each of the first electrically conductive areas is at least 6 mm, more preferred at least 8 mm and most preferred at least 10 mm.

8. The system according to any one of the preceding claims,
**characterized in that** the electrically conductive layer is completely or partly covered by a transparent or non-transparent layer.

9. The system according to any one of the preceding claims,
**characterized in that** the capacitive information carrier comprises a visual marker that marks the position of the second electrically conductive area.

10. The system according to any one of the preceding claims,
**characterized in that** the electrically conductive layer is partially covered by a transparent or non-transparent layer, so that the entire electrically conductive layer is covered except for the second electrically conductive area.

11. A method for transmitting information from a capacitive information carrier to a device comprising a capacitive surface sensor, comprising
**a)** providing the capacitive information carrier comprising an electrically non-conductive substrate on which at least one electrically conductive layer is situated comprising at least one first electrically conductive area resembling in shape, size, dimension and/or conductivity a human fingertip, at least one second electrically conductive area and at least one third electrically conductive area, that connects at least one first electrically conductive area with at least one second electrically conductive area or at least two electrically conductive first areas
**b)** providing the device comprising the capacitive surface sensor
**c)** bringing the capacitive information carrier into contact with the capacitive surface sensor, while a conductive object touches the second electrically conductive area, whereby at least two touch data points are generated on the device

12. The method according to the preceding claim,
**characterized in that** the at least two touch data points are assigned to at least one first touch data point, representing the coordinate position of the at least one first electrically conductive area on the capacitive surface sensor, and to at least one second touch data point, representing the coordinate position of the at least one second electrically conductive area on the capacitive surface sensor.

13. The method according to the preceding claim,
**characterized in that** the at least one touch data point representing the at least one first electrically conductive area is used to decode the information provided by the capacitive information carrier.

14. The method according to any one of the preceding claims **11-13,**
**characterized in that** the touch data points are assigned by their position and/ or temporal stability of their position.

15. The method according to any one of the preceding claims **11-14,**
**characterized in that** the touch data points are assigned by their dimension and/ or temporal stability of their dimension.
